(19) Europäisches Patentamt

European Patent Office

Office européen des brevets

(11) **EP 0 725 225 B1**

(12) **EUROPEAN PATENT SPECIFICATION**

(45) Date of publication and mention
of the grant of the patent:
**19.04.2000   Bulletin 2000/16**

(51) Int Cl.⁷: **F16D 48/08**
// F16D105:02, F16D105:06,
F16D113:00

(21) Application number: **95300634.3**

(22) Date of filing: **01.02.1995**

(54) **Method and apparatus for determining clutch touch point**

Berührpunkt-Erkennungsverfahren und -vorrichtung einer Kupplung

Procédure et appareil pour détection du point de contact d'un embrayage

(84) Designated Contracting States:
**AT DE FR GB IT SE**

(43) Date of publication of application:
**07.08.1996   Bulletin 1996/32**

(73) Proprietor: **EATON CORPORATION**
**Cleveland, Ohio 44114-2584 (US)**

(72) Inventor: **Olson, Otis John**
**Farmington Hills, Michigan 48334 (US)**

(74) Representative: **Clarke, Geoffrey Howard**
**Eaton B.V.**
**P.O.Box 75777**
**1118 ZX Luchthaven Schiphol (NL)**

(56) References cited:
**EP-A- 0 410 346       EP-A- 0 550 222**
**DE-A- 3 218 933       US-A- 4 899 858**
**US-A- 5 029 678**

## Description

## Technical Field

This invention relates generally to automatic clutch control systems for controlling the coupling of a motor vehicle engine with the vehicle transmission and more particularly to a method and apparatus for determining the incipient torque position of the clutch.

## Background Art

A typical motor vehicle clutch control system moves the clutch from a disengaged position to an incipient torque position or touch point at a relatively fast rate. If the clutch actuator overshoots this initial torque position at the fast rate, the resulting buildup of clutch torque may be excessive and cause the vehicle to lurch or bounce, such that a smooth start is not achieved. It is therefore important to accurately identify the touch point.

It has been proposed to optimize the positioning of a motor vehicle clutch at the incipient torque position utilizing a variety of sensed parameters including engine speed and transmission input speed. See for example US-A-5 332 074 assigned to the assignee of the present invention, as well as U.S. Patent Nos. 5,176,324; 5,029,678 and 4,678,069.

Another form of automatic clutch control system is described in US-A-4 899 858. That reference discloses a system and method for determining a touch point of a clutch, whilst the vehicle is stationary and the transmission is in neutral. The clutch is slowly applied until the input shaft is observed to turn against the resistance applied by the inertia brake to stop rotation of the input shaft. Position of the clutch when the input shaft first begins to turn is stored. A small constant offset is subtracted from the position stored to take account of the torque required to turn the input shaft against the resistive force of the inertia brake. This system then may be used for compensating for wear and the like.

In systems where speed sensors such as those of the variable reluctance type are used, the sensor output signal drops to zero at some finite "dropout" speed greater than zero, for example 180 rpm for a typical sensor. When attempting to locate the incipient torque position of the clutch, equivalent to sensing the first rotation of the transmission input shaft, some method of compensating for lack of information from the speed sensor at the touch point must be employed or error will be introduced.

## Summary Of The Invention

In view of the above it is an object of the present invention to provide an improved method and apparatus for determining clutch touch point which assures a low torque during initial clutch engagement to insure smooth starts of the vehicle.

It is an object of the present invention to provide an improved method and apparatus for determining clutch touch point which calculates the touch point directly without resort to an arbitrary position offset.

It is another object of the present invention to provide a method and apparatus for determining clutch touch point using data obtained from sensing transmission input shaft speed and clutch position at two discrete times during clutch engagement.

In accordance with the present invention the clutch is moved, under computer control, at a constant rate, from a disengaged position toward a fully engaged position while the transmission is in neutral gear, and the position of the clutch is detected at first and second times (T1 and T2). Time T1 corresponds to the time when the detected speed of the transmission input shaft is just above the dropout speed of the input shaft speed sensor used, for example 180 RPM. Time T2 corresponds to the time when the detected speed of the input shaft is close to engine speed, for example 75% of engine speed. The position of the clutch corresponding to the incipient torque point or engagement point, where the input shaft begins to move, is extrapolated by subtracting an amount from the position detected at time T1 equal to the change in position from T1 to T2 multiplied by the square root of the ratio of the input shaft speeds at T1 and T2. The rationale for this method of determining the clutch touch point is based on the assumption that over the time interval of T1 to T2 a linear relationship exists between clutch torque and clutch position and therefore clutch torque and consequently angular acceleration is proportional to time and angular velocity of the input shaft speed is a function of time squared. Thus, the present invention provides an indication of the touch position equivalent to sensing the first rotation of the input shaft as if a zero speed sensor was being employed.

## Brief Description Of The Drawings

A more complete understanding of the present invention may be had from the following detailed description which should be read in conjunction with the drawings in which:

    FIGURE 1 is a block diagram of the apparatus of the present invention; and

    FIGURE 2 is a flow chart of the computer program implementing the method of the present invention.

## Detailed Description of Preferred Embodiment

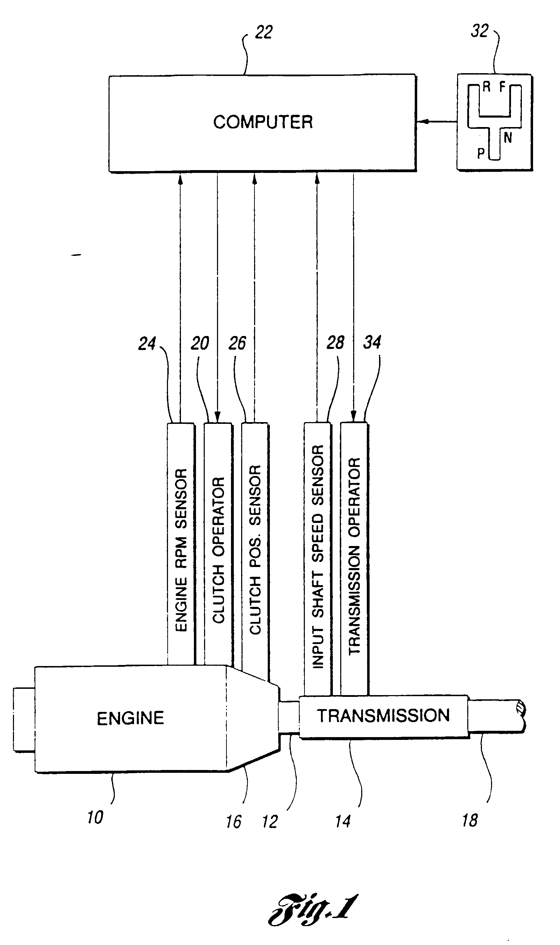

Referring now to the drawings and initially to Figure 1, the engine 10 is selectively coupled to the input shaft 12 of a transmission 14 by a friction clutch mechanism 16. The transmission 14, when coupled to the engine 12 drives an output shaft 18 at a speed which is reduced relative to the speed of the input shaft 12 by the gear ratio selected. The shaft 18 may for example be connected to a vehicle's drive wheels by a differential mechanism or the like.

The mechanism 16 includes the usual friction clutch which can be moved from a fully disengaged position to a fully engaged position by an operating mechanism 20 that is controlled by a programmable computer 22. The computer 22 receives input data from an engine RPM sensor 24, a clutch position sensor 26, and a transmission input shaft sensor 28. The computer 22 also receives a transmission gear ratio command from a gear selector 32 and provides a control signal to a transmission operator 34 to effect the desired gear selection. The clutch position may be monitored by connecting the sensor 26 to the clutch linkage to indicate position of the clutch release bearing. The clutch operator 20 may include an actuator that positions the clutch linkage in response to commands from the computer 22. The release bearing is preferably moved at a substantially constant rate by pulse width commands that produce a constant step size or clutch movement increment each fixed time interval.

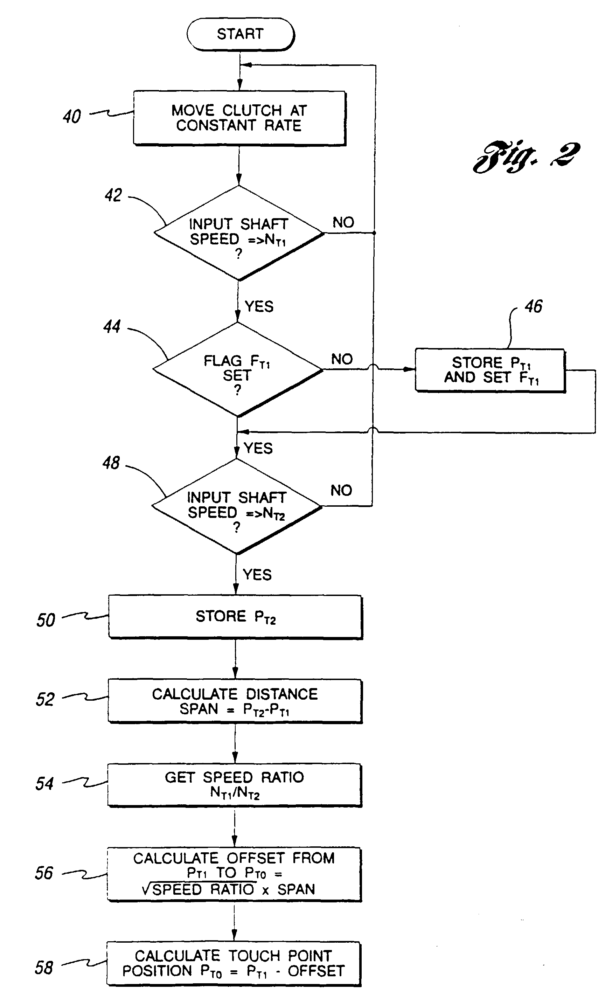

The determination of the clutch touch point is preferably made each time the vehicle is started, while the transmission is in neutral gear and is stored in the memory of computer 22 replacing the previously determined position value. The method of determining clutch touch point with be discussed in some detail in connection with the flow chart of Figure 2. Data is gathered by the computer 22 at two discrete times , T1 and T2. T1 represents the time at which the speed of the transmission input shaft 12 is just above the dropout speed of the sensor 28. Time T2 represents the time at which the speed of the transmission input shaft 12 is approaching synchronism with engine speed for example where the output of sensor 28 is approximately 75% of the output of sensor 24. Since the clutch release bearing is being moved at a constant rate, a linear relationship may be assumed between clutch torque and clutch position during the short portion of the clutch stroke traversed between the times T1 and T2. This linear relationship may be expressed by the equation:

$$T = k * t$$

where

> T = torque
> t = time

and k is a constant Angular acceleration is given by the expression:

$$T = J * \alpha$$

where J = moment of inertia about the axis of rotation, and
$\alpha$ = angular acceleration.
Substituting for T in the above equation:

$$J * \alpha = k * t$$

Defining a new constant K = k/J.
Then:

$$\alpha = K * t$$

Since angular velocity equals acceleration multiplied by time, we may write:

$$\omega = \alpha * t$$

where $\omega$ = angular velocity
Substituting for $\alpha$:

$$\omega = K * t^2$$

Using the speeds at T1 and T2, the time increment elapsed since the shaft speed was at zero speed is calculated based on the fact that shaft speed is zero at time zero (T0) and shaft speed increases as a function of time squared. Using the positions at T1 and T2, the position corresponding to zero shaft speed is calculated using the linear relationship between position and time.

With reference to the flow chart of Figure 2, the touch point determination routine is entered each time the vehicle is started if the transmission is in neutral and the clutch is fully disengaged. Under these conditions the computer begins advancing the clutch toward an engaged position, a fixed amount each predetermined time interval so that the clutch is moved at a constant rate as indicated by the block 40. When the sensed transmission input shaft speed is equal to or greater than a predetermined speed $N_{T1}$, just above dropout speed of the sensor, as determined by the decision block 42, a flag $F_{T1}$ is checked at decision block 44. If the flag is CLEAR, the position of the clutch, $P_{T1}$, is stored, the flag is SET at block 46. In decision block 48 the input shaft speed is compared with a predetermined speed $N_{T2}$ following the operation in block 46 or if the flag $F_{T1}$ is SET. If the input shaft speed is equal to or greater than $N_{T2}$, then the position of the clutch, $P_{T2}$, is stored at block 50, otherwise the clutch is moved toward the engaged position until the speed $N_{T2}$ is detected. At block 52, the distance span between $P_{T2}$ and $P_{T1}$ is calculated and the speed ratio $N_{T1}/N_{T2}$ is retrieved at block 54. The offset from clutch position $P_{T1}$ to the clutch touch position is calculated at block 56 and subtracted from $P_{T1}$ in block 58. As shown in block 56, the offset is the square root of the speed ratio multiplied by the distance span.

While the best mode for carrying out the invention has been described in detail, those familiar with the art to which this invention relates will recognize various alternative designs and embodiments for practicing the invention as defined by the following claims.

## Claims

1. Apparatus for determining a touch point position of a clutch coupling a vehicle engine (10) with a transmission input shaft (12), including an actuator (16) for moving said clutch from a disengaged position toward an engaged position, a first sensor (28) for sensing speed of the input shaft (12), a second sensor (26) for sensing position of the clutch, and a computer (22) responsive to inputs from the first (28) and second (26) sensors, the computer (22) providing an output to control the actuator (16) to position the clutch, the computer (22) programmed to determine the touch point position of the clutch characterised by:

   moving the clutch at a substantially constant rate toward the engaged position while detecting first and second positions of the clutch when speed of the input shaft (12) is respectively at first and second predetermined speeds; and calculating the touch point position equal to the first position minus an offset position equal to distance between the first and second position times the square root of a ratio of the first and second speeds.

2. The apparatus of claim 1 wherein the first predetermined speed is a fixed amount above a dropout speed of the first sensor (28).

3. The apparatus of claim 2 further comprising a third sensor (24) for sensing engine speed of the engine, the apparatus further characterised by the second predetermined speed being less than 100% of the engine speed.

4. A method of determining a touch point position of a clutch coupling a vehicle engine (10) with a transmission input shaft (12), the method characterised by:

   moving the clutch (40) from a disengaged position toward an engaged position at a substantially constant rate; detecting a first position (46) of the clutch when the speed of the input shaft (12) is at a first predetermined speed (42,44); detecting a second position (50) of the clutch when the speed of the input shaft (12) is at a second predetermined speed greater than the first predetermined speed (48); and calculating the touch point position (58) by subtracting from the first position an offset position equal to the distance between the first and second positions times the square root of the ratio of the first and second speeds.

5. The method of claim 4 further characterised in that the speed of the input shaft is sensed by a sensor having a known dropout speed and the first predetermined speed is a fixed amount above the dropout speed.

6. The method of claim 5 wherein the second predetermined speed is less than 100% of the engine speed.

7. A method of determining a touch point position of a clutch coupling a vehicle engine (10) with a transmission input shaft (12), the method characterised by:

   moving the clutch (40) from a disengaged position toward an engaged position at a substantially constant rate; detecting and storing a first position (46) of the clutch when the speed of the input shaft is at a first predetermined speed (42,44); detecting and storing a second position (50) of the clutch when the speed of the input shaft is at a second predetermined speed greater than said first predetermined speed (48); calculating a span distance (52) equal to the difference between the first and second position; calculating an offset distance (56) equal to a product of the span distance and square root of a ratio of the first and second speeds; and calculating the touch point position (58) by subtracting the offset distance from the first position.

## Patentansprüche

1. Vorrichtung zum Bestimmen der Berührpunktposition einer Kupplung, die einen Fahrzeugmotor (10) mit einer Getriebeeingangswelle kuppelt, mit einem Aktuator (16), um die Kupplung aus der ausgerückten Stellung in Richtung auf eine eingerückte Stellung zu bewegen, mit einem ersten Sensor (28) zum Ermitteln der Drehzahl der Eingangswelle (12), mit einem zweiten Sensor (26) zum Ermitteln der Stellung der Kupplung, und mit einem Computer (22) der Abhängigkeit von Eingangssignalen von dem ersten (28) und dem zweiten (26) Sensor arbeitet, wobei der Computer (22) ein Ausgangssignal an den Aktuator (16) zum Positionieren der Kupplung liefert und der Computer (22) so programmiert ist, dass er die Berührpunktpositionen der Kupplung bestimmt, dadurch gekennzeichnet, dass:

die Kupplung mit einer im wesentlichen konstanten Geschwindigkeit in Richtung auf die Einrückstellung bewegt wird, während eine erste und zweite Stellung der Kupplung erfasst wird, wenn die Drehzahl der Eingangswelle (12) bei einer ersten und zweiten vorbestimmten Drehzahl liegt, und
dass die Berührpunktestellung entsprechend der ersten Stellung abzüglich einer Versatzstellung berechnet wird, die gleich dem Abstand zwischen der ersten und der zweiten Stellung multipliziert mit der Quadratwurzel aus dem Verhältnis zwischen der ersten und der zweiten Drehzahl ist.

2. Vorrichtung nach Anspruch 1, bei der die erste vorbestimmt Drehzahl um einen festen Betrag über der Dropout-Drehzahl des ersten Sensors (28) liegt.

3. Vorrichtung nach Anspruch 2, die ferner einen dritten Sensor (24) aufweist, um die Drehzahl des Motors zu erfassen, dadurch gekennzeichnet, dass die zweite vorbestimmte Drehzahl weniger als 100% der Motordrehzahl beträgt.

4. Verfahren zum Ermitteln der Berührpunktposition einer Kupplung, die einen Fahrzeugmotor (10) mit einer Getriebeeingangswelle (12) kuppelt, wobei das Verfahren dadurch gekennzeichnet ist,

dass die Kupplung (40)mit einer im wesentlichen konstanten Geschwindigkeit aus der ausgerückten Stellung in Richtung auf die eingerückte Stellung bewegt wird,
dass eine erste Stellung (26) der Kupplung ermittelt wird, wenn die Drehzahl der Eingangswelle (12) bei einer ersten vorbestimmten Drehzahl (42,44) liegt;
dass eine zweite Stellung (50) der Kupplung ermittelt wird, wenn die Drehzahl der Eingangswelle (12) auf einer zweiten vorbestimmten Drehzahl liegt, die größer ist als die erste vorbestimmt Drehzahl (48) und
dass die Berührpunktposition (58) berechnet wird, indem von der ersten Stellung einer Versatz abgezogen wird, der gleich der Differenz zwischen der ersten und der zweiten Stellung multipliziert mit der Quadratwurzel aus dem Verhältnis der ersten und der zweiten Drehzahl ist.

5. Verfahren nach Anspruch 4, ferner dadurch gekennzeichnet, dass die Drehzahl der Eingangswelle mittels eines Sensors erfasst wird, der eine bekannte Dropout-Drehzahl aufweist und die erste vorbestimmte Drehzahl um einen festen Betrag über der Dropout-Drehzahl liegt.

6. Verfahren nach Anspruch 5, bei dem die zweite vorbestimmte Drehzahl weniger als 110% der Motordrehzahl beträgt.

7. Verfahren zum Ermitteln der Berührpunktposition einer Kupplung, die einen Fahrzeugmotor (10) mit einer Getriebeeingangswelle (12) kuppelt, wobei das Verfahren dadurch gekennzeichnet ist,

dass die Kupplung (40) mit einer im wesentlichen konstanten Geschwindigkeit aus der ausgerückten Stellung in Richtung auf eine eingerückte Stellung bewegt wird;
dass eine erste Stellung (46) der Kupplung erfasst und gespeichert wird, wenn die Drehzahl der Eingangswelle bei einer ersten vorbestimmten Drehzahl (42,44) liegt;
dass eine zweite Stellung der Kupplung erfasst und gespeichert wird, wenn die Drehzahl der Eingangswelle bei einer zweiten vorbestimmten Drehzahl liegt, die größer ist als die erste vorbestimmte Drehzahl (48);
dass eine Distanzspanne (52) berechnet wird, die gleich der Differenz zwischen der ersten und der zweiten Stellung ist;
dass eine Offset-Distanz (56) berechnet wird, die gleich einem Produkt der Differenzspanne und der Quadratwurzel aus dem Verhältnis der ersten und der zweiten Drehzahl ist; und
dass die Berührpunktposition (48) berechnet wird, indem die Offset-Distanz von der ersten Position abgezogen wird.

**Revendications**

1. Dispositif pour déterminer une position de point de contact d'un embrayage accouplant un moteur de véhicule (10) à un arbre d'entrée (12) de boîte de transmission, comprenant un actionneur (16) pour déplacer ledit embrayage d'une position désengagée vers une position engagée, un premier capteur (28) pour détecter la vitesse de l'arbre d'entrée (12), un second capteur (26) pour détecter la position de l'embrayage, et un calculateur (22) réagissant aux signaux d'entrée provenant des premier (28) et second (26) capteurs, le calculateur (22) délivrant un signal de sortie pour commander l'actionneur (16) afin de positionner l'embrayage, le calculateur (22) étant programmé pour déterminer la position de point de contact de l'embrayage, caractérisé en ce que :

le déplacement de l'embrayage à une vitesse essentiellement constante vers la position engagée en détectant les première et seconde positions de l'embrayage quand la vitesse de l'arbre d'entrée (12) est respectivement égale aux première et seconde vitesses prédéterminées ; et

le calcul de la position de point de contact en soustrayant de la première position une position de décalage égale au produit de la distance entre les première et seconde positions par la racine carrée d'un rapport des première et seconde vitesses.

2. Dispositif selon la revendication 1, caractérisé en ce que la première vitesse prédéterminée est une valeur fixe supérieure à la vitesse de mise au repos du premier capteur (28).

3. Dispositif selon la revendication 2, comprenant en plus un troisième capteur (24) pour détecter le régime moteur, le dispositif étant de plus caractérisé par le fait que la seconde vitesse prédéterminée est inférieure à 100 % du régime moteur.

4. Procédé pour déterminer une position de point de contact d'un embrayage accouplant un moteur de véhicule (10) à un arbre d'entrée (12) de boîte de transmission, ce procédé étant caractérisé par :

le déplacement de l'embrayage (40) d'une position désengagée vers une position engagée à une vitesse essentiellement constante ;

la détection d'une première position (46) de l'embrayage quand la vitesse de l'arbre d'entrée (12) est égale à une première vitesse prédéterminée (42, 44) ;

la détection d'une seconde position (50) de l'embrayage quand la vitesse de l'arbre d'entrée (12) est égale à une seconde vitesse prédéterminée supérieure à la première vitesse prédéterminée (48) ; et

le calcul de la position de point de contact (58) en soustrayant de la première position une position de décalage égale au produit de la distance entre les première et seconde positions par la racine carrée du rapport des première et seconde vitesses.

5. Procédé selon la revendication 4, caractérisé de plus en ce que la vitesse de l'arbre d'entrée est détectée par un capteur ayant une vitesse de mise au repos connue et que la première vitesse prédéterminée est une valeur fixe supérieure à la vitesse de mise au repos.

6. Procédé selon la revendication 5, caractérisé en ce que la seconde vitesse prédéterminée est inférieure à 100 % du régime moteur.

7. Procédé pour déterminer une position de point de contact d'un embrayage accouplant un moteur de véhicule (10) à un arbre d'entrée (12) de boîte de transmission, ce procédé étant caractérisé par :

le déplacement de l'embrayage (40) d'une position désengagée vers une position engagée à une vitesse essentiellement constante ;

la détection et la mémorisation d'une première position (46) de l'embrayage quand la vitesse de l'arbre d'entrée est égale à une première vitesse prédéterminée (42, 44) ;

la détection et la mémorisation d'une seconde position (50) de l'embrayage quand la vitesse de l'arbre d'entrée est égale à une seconde vitesse prédéterminée supérieure à la première vitesse prédéterminée (48) ; et

le calcul d'une distance d'intervalle (52) égale à la différence entre la première et la seconde position ;

le calcul d'une distance de décalage (56) égale à un produit de la distance d'intervalle et la racine carrée du rapport des première et seconde vitesses ; et

le calcul de la position de point de contact (58) en soustrayant la distance de décalage de la première position.

*Fig.1*

*Fig. 2*

START

40 — MOVE CLUTCH AT CONSTANT RATE

42 — INPUT SHAFT SPEED $=> N_{T1}$ ? — NO

YES

44 — FLAG $F_{T1}$ SET ? — NO → 46 — STORE $P_{T1}$ AND SET $F_{T1}$

YES

48 — INPUT SHAFT SPEED $=> N_{T2}$ ? — NO

YES

50 — STORE $P_{T2}$

52 — CALCULATE DISTANCE SPAN = $P_{T2} - P_{T1}$

54 — GET SPEED RATIO $N_{T1}/N_{T2}$

56 — CALCULATE OFFSET FROM $P_{T1}$ TO $P_{T0}$ = $\sqrt{\text{SPEED RATIO}} \times \text{SPAN}$

58 — CALCULATE TOUCH POINT POSITION $P_{T0} = P_{T1} - \text{OFFSET}$